# EUROPEAN PATENT APPLICATION

(11) **EP 4 155 268 A1**
(43) Date of publication of application: **29.03.2023**
(21) Application number: 22198032.9
(22) Date of filing: 27.09.2022
(51) Int. Cl.: C01B 33/12, C08K 3/36, C08K 9/12, A41D 19/00, B60C 1/00, C09C 1/04

(54) **SINGLE ATOM ZINC MATERIAL, RUBBER ARTICLE AND PREPARATION METHOD THEREOF**

(30) Priority: 28.09.2021 CN 202111147315
(71) Applicant: Linkway Technology Co., Ltd., Nanning Pilot Free Trade Zone, Nanning Area Guangxi 530028 (CN)
(72) Inventor: ZHAO, Chao, Nanning Pilot Free Trade Zone (Nanning Area), Guangxi, 530028 (CN); WANG, Jing, Nanning Pilot Free Trade Zone (Nanning Area), Guangxi, 530028 (CN); HUANG, Hongfeng, Nanning Pilot Free Trade Zone (Nanning Area), Guangxi, 530028 (CN); WU, Yubo, Nanning Pilot Free Trade Zone (Nanning Area), Guangxi, 530028 (CN)
(74) Representative: Dr. Gassner & Partner mbB

(57) **Abstract**

The present application relates to the technical field of rubber additive, and particularly to a single atom zinc material, rubber articles and preparation method thereof. The single atom zinc material is made of a carrier and a transition metal, the carrier is one of nano silica and nano calcium carbonate, or combination thereof. The transition metal is zinc; and the transition metal is anchored on a defect site on a surface of the carrier in a form of a single atom. The present application adopted a new monatomic technology to prepare a newly developed single atom zinc material applied to the rubber field, which can totally replace the traditional zinc oxide. A usage of the zinc oxide was decreased by 60%-70%, nonferrous metal zinc resources were significantly saved, carbon emissions caused by related smelting were reduced, while residual pollution of heavy metals to the environment were effectively reduced, and industrialization was easy to achieve.

## Description

### TECHNICAL FIELD

The present application relates to the technical field of rubber additive, and particularly to a single atom zinc material, rubber article and preparation method thereof.

### BACKGROUND ART

Zinc oxide has a broad application prospect in the fields of rubber, coating material, catalysts and chemical fiber, etc. Currently, zinc oxide is an indispensable vulcanization activator for the development of the rubber industry. According to incomplete statistics, 50% of industrially produced zinc oxide are used in the rubber industry, mainly because zinc oxide is one of the raw materials (vulcanization activator) of rubber manufacture, and is an important material for automobile tyre.

Zinc oxide contains trace amount of heavy metals (lead oxide, cadmium oxide) and "zinc ion". Lead, cadmium and "zinc ion" can catalyze the aging of the automobile tyre rubber. In addition, fine debris generated by friction between automobile tyre and the ground during driving will be scattered into water and soil, which will cause environmental pollution.

Zinc oxide has been included in the list of hazardous substances in EU REACH regulation in 2003, which had been listed in the products to be phased out. It is pointed out in the EU REACH regulation, when zinc is released to the living space of human beings and enters a river basin, sea area and drinking water source zone, some zinc alloys are toxic to microbes and organisms in water bodies. In 2016, State of California has proposed a bill (SB 1260) to recommend restricting the use of zinc or zinc oxide in tyres and prohibiting the sale of tyre products containing zinc of more than a certain amount.

An annual demand for zinc oxide in rubber industry is about 1.2 million tons in China. According to the current situation of "zinc restriction order", replacement materials are urgently needed, or the usage amount of zinc oxide has to be reduced.

### SUMMARY

In order to solve the problem of high content of zinc oxide and zinc resource waste in the related art, the present application provides a single atom zinc material, rubber article and preparation method thereof.

In a first aspect, the single atom zinc material of the present application adopts the following technical solution:
the single atom zinc material includes a carrier and a transition metal, in which the carrier is one of nano silica and nano calcium carbonate, or a combination thereof. The transition metal is zinc; and the transition metal is anchored on a defect site on a surface of the carrier in a form of a single atom.

In the above technical solution, the single atom zinc material is an ideal replacement material for traditional zinc oxide. The single atom zinc material is prepared by a single atom catalysis technology. The single atom zinc material uses single-atom zinc as an active center; the active site is clear and even; and the utilization rate of catalytic activity reaches 100%, thereby solving the problems about high content of zinc oxide and waste of zinc resources. The single atom zinc material prepared in the present application may be used in rubber field, which is not only a vulcanization activator with low zinc oxide consumption, but also can play a multi-functional additive role in the rubber field. The single atom zinc material of the present application has obvious function as multi-functional additive, when it used in the rubber field, the rubber can have more excellent thermal conductivity, corrosion resistance, wear resistance and anti-aging property, tear resistance, tensile strength and a long service life. Meanwhile, it may also reduce production costs, save zinc resources, and achieve energy saving and environmental protection goal.

In some embodiments, a mass ratio of the transition metal to the carrier in the single atom zinc material is 1:5-1:10.

By adopting the above technical solution, the zinc content in the traditional zinc oxide is 80%, but the zinc content in the single atom zinc material of the present application is 10%-20%, which can save more than 500,000 tons of metal zinc every year, decrease more than 2.5 million tons of carbon emission, and substantially decrease the residual pollution of heavy metal zinc in the environment by 60%-70%.

In some embodiments, the nano silica has a particle size of 100 nm; and the calcium carbonate has a particle size of 100 nm.

In a second aspect, a preparation method of the single atom zinc material of the present application adopts the following technical solution:
a preparation method of the single atom zinc material includes the following steps:
step one: ball-milling a carrier to obtain a carrier with a particle size of less than or equal to 200 nm;
step two: adding the carrier obtained in step one into an aqueous solution of metal hydroxide, in which a mass ratio of the 1mol/L aqueous solution of metal hydroxide to the carrier is (1.0-1.2): 1; heating to 75-85°C and reacting for 35-40 h to induce defect sites on a surface of the carrier; filtering; drying; and grinding;
step three: mixing the carrier prepared in step two with a zinc metal salt solution with a zinc ion content of 100-200g/L; heating to 58-65°C under stirring for 16-24 h; removing a supernatant; centrifuging and drying for 10-14 h under 100-120°C to obtain a dried material; and ball-milling the dried material; and
step four: activating the solid powder obtained in step three to obtain a the single atom zinc material.

By adopting the above technical solution, the preparation method in the present application is relatively simple and convenient for industrial production.

In some embodiments, the carrier has a particle size of 500 nm before the ball-milling in step one; and the carrier has a particle size of 100 nm after the ball-milling in step one.

In some embodiments, step two comprises adding 1000 g of the carrier obtained in step one into 1L of 1mol/L aqueous sodium hydroxide solution; heating to 80°C and reacting for 36 h to induce defect sites on the surface of the carrier; filtering drying and grinding.

In some embodiments, step three comprises mixing the carrier prepared in step two with 1 L of the zinc metal salt solution with a zinc ion content of 100-200g/L; heating to 60°C under stirring for 16-24 h; removing the supernatant; centrifuging and drying for 12 h under 100-120°C; and ball-milling the dried material with a ball-milling speed of 600 r/min for 45-60 min to obtain the solid powder with a particle size of 90-120 nm.

In some embodiments, the zinc metal salt solution is zinc nitrate solution.

In some embodiments, in step four, activating the solid powder obtained in step three comprises calcining the solid powder under a temperature of 200-600°C and an argon atmosphere to obtain the single atom zinc material, wherein a calcination heating rate is 2-5°C/min, and calcination time is 2-6 h.

By adopting the above technical solution, the pore structure may be re-expanded and the activity may be restored by alkali adjustment method. During the activating process, the volatile components and the chemically bound water are removed by a thermal decomposition reaction to form a stable structure of the single atom zinc material.

In some embodiments, the prepared single atom zinc material may be applied to the rubber field, and completely replaces zinc oxide, so that the consumption of metal zinc may be decreased by 60%-70%; nonferrous metal zinc resources are significantly saved; carbon emissions caused by related smelting are reduced; while residual pollution of heavy metals to the environment are effectively reduced; and industrialization is easy to be achieved.

In some embodiments, the aqueous solution of metal hydroxide is one selected from a group consisting of aqueous sodium hydroxide solution, aqueous calcium hydroxide solution and aqueous potassium hydroxide solution.

In a third aspect, the present application provides a rubber article including the single atom zinc material in the present application, and the rubber article is selected from a group consisting of medical rubber gloves, medical rubber stopper, industrial rubber article and a tyre. The industrial rubber article may be a rubber waterstop, a rubber seal, a rubber film, a rubber tape, a rubber piece, etc.

In a fourth aspect, the present application provides a use of the single atom zinc material in preparing the rubber article.

In some examples, the rubber article may be medical rubber gloves, medical rubber stopper, industrial rubber article or tyre.

In summary, the present application has the following advantages:
1. Comparing with the tradition zinc oxide, the zinc content in traditional zinc oxide is 80%, but the zinc content in the single atom zinc material is 10%-20%, which can save more than 500,000 tons of metal zinc every year, decrease more than 2.5 million tons of carbon emission, and substantially decrease the residual pollution of heavy metal zinc in the environment by 60%-70% to achieve the development requirements of energy saving and environmental protection;
2. the single atom zinc material of the present application can significantly improve the thermal conductivity of the rubber, which is conducive to the heat dissipation of the tyres and ensuring the driving safety;
3. the single atom zinc material of the present application plays a great role with a small addition amount, which can effectively inhibit mould and fungal growth and resist rubber aging by ultraviolet; and
4. the single atom zinc material of the present application can be widely used in the rubber field, so that the rubber can have more excellent thermal conductivity, corrosion resistance, wear resistance and anti-aging property, tear resistance, tensile strength and a long service life.

### BRIEF DESCRIPTION OF THE DRAWINGS

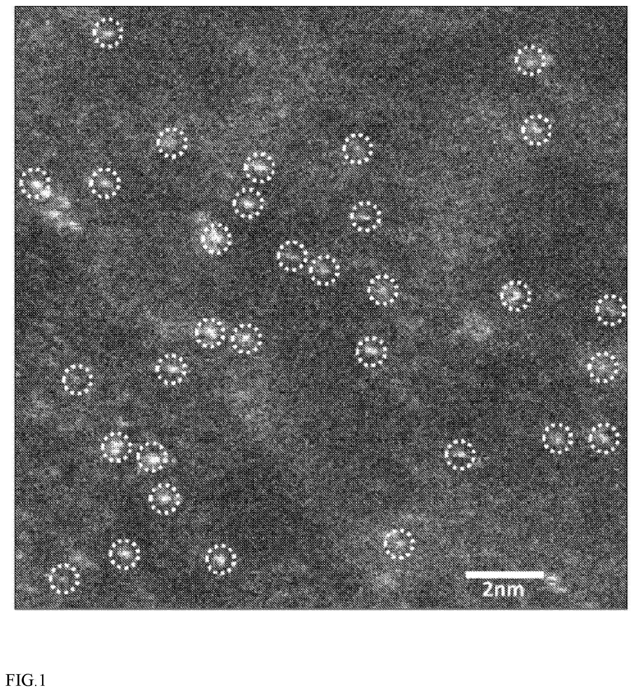

FIG. 1 is a structural diagram of scanning electron microscope of a single atom zinc material according to the present application that can replace a zinc oxide in rubber field.

### DETAILED DESCRIPTION

The present application is further described in detail below in combination with the Figure and examples.

### Raw materials

| Raw materials | Source |
|---|---|
| Nano silica, 500 nm | Shanghai Naiou Nano Technology Co., Ltd |
| Calcium carbonate, 500 nm | Shanghai Naiou Nano Technology Co., Ltd |
| Potassium hydroxide | HUSHI ^{,} AR ^{,} 500 g/bottle |
| Sodium hydroxide | HUSHI ^{,} AR ^{,} 500 g/bottle |
| Calcium hydroxide | HUSHI ^{,} AR ^{,} 500 g/bottle |
| Zinc nitrate hexahydrate | Zhejiang Lanrun Chemical Raw Materials Co., Ltd |

### Examples

### Example 1

Referring to FIG.1, FIG. 1 is a structural diagram of scanning electron microscope of a single atom zinc material used in rubber material disclosed in the present application. The single atom zinc material includes a carrier and a transition metal; the carrier is nano silica with a particle size of 100 nm; the transition metal is zinc; and zinc atoms is anchored on defect sites on a surface of the carrier in a form of a single atom. A mass ratio of a single atom zinc to the nano silica is 1:10.

A preparation method of the single atom zinc material included the following steps:
(1) the nano silica with a particle size of 500 nm was added into a planetary ball mill for ball-milling with a ball-milling speed of 450 rpm. After ball-milling for 30 min, the carrier had a particle size of 100 nm;
(2) 1000 g of the nano silica with a particle size of 100 nm in step (1) was weighted, and then added into 1L of 1mol/L aqueous solution of sodium hydroxide under stirring, in which a stirring speed of a stirrer was controlled at 1000 rpm. The mixture was heated to 80°C, and fully reacted for 36 h to induce defect sites on a surface of the carrier. Then the resultant was filtered, dried and fully grinded for 20 min in an agate mortar;
(3) the carrier prepared in step (2) was mixed with a zinc nitrate solution with a zinc ion content of 100 g/L. The mixture was heated to 60°C, and fully stirred for 16 h with a stirring speed of 800 rpm. The supernatant was removed. The precipitate was centrifuged, and dried for 12 h in a blast drying oven with a temperature of 100°C. The dried material was ball-milled with a ball-milling speed of 600 rpm for 45 min, after which the ball-milled material had a particle size of 100 nm; and
(4) the solid powder obtained in step (3) was treated at high temperature under argon atmosphere, with a calcination temperature of 400°C, a heating rate of 2°C/min, and a calcination time of 2 h; then the single atom zinc material with a zinc content of 10% was obtained.

### Example 2

The preparation method for the single atom zinc material included the following steps:
(1) the nano silica with a particle size of 500 nm was added into a planetary ball mill for ball-milling with a ball-milling speed of 450 rpm. After ball-milling for 30 min, the carrier had a particle size of 100 nm;
(2) 1000 g of the nano silica carrier with a particle size of 100 nm in step (1) was weighted and then added into 1L of 1mol/L aqueous solution of sodium hydroxide under stirring, in which the stirring speed of the stirrer was controlled at 1000 rpm. The mixture was heated to 80°C, fully reacted for 36 h to induce defect sites on the surface of the carrier. Then the resultant was filtered, dried and fully grinded for 20 min in an agate mortar;
(3) the carrier modified in step (2) was mixed with a zinc nitrate solution with a zinc ion content of 200 g/L. The mixture was heated to 60°C, and fully stirred for 24 h. The supernatant was removed. The precipitate was centrifuged, and dried for 12 h in a blast drying oven with a temperature of 120°C. The dried material was ball-milled with a ball-milling speed of 600 rpm for 45 min, after which the ball-milled material had a particle size of 100 nm; and
(4) the solid powder obtained in step (3) was treated at high temperature under argon atmosphere, with a calcination temperature of 500°C, a heating rate of 5°C/min, and a calcination time of 3 h; then the single atom zinc material with a zinc content of 20% was obtained.

### Example 3

The preparation method for the single atom zinc material included the following steps:
(1) the nano silica with a particle size of 500 nm was added into a planetary ball mill for ball-milling with a ball-milling speed of 450 rpm. After ball-milling for 30 min, the carrier had a particle size of 100 nm;
(2) 1000 g of the calcium carbonate carrier with a particle size of 100 nm in step (1) was weighted and then added into 1L of 1mol/L aqueous solution of sodium hydroxide under stirring, in which the stirring speed of the stirrer was controlled at 1000 rpm. The mixture was heated to 80°C, fully reacted for 36 h to induce defect sites on the surface of the carrier. Then the resultant was filtered, dried and fully grinded;
(3) the carrier modified in step (2) was mixed with a zinc nitrate solution with a zinc ion content of 100 g/L. The mixture was heated to 60°C, and fully stirred for 24 h. The supernatant was removed. The precipitate was centrifuged, and dried for 12 h in a blast drying oven with a temperature of 120°C. The dried material was ball-milled with a ball-milling speed of 600 rpm for 45 min, after which the ball-milled material had a particle size of 100 nm; and
(4) the solid powder obtained in step (3) was treated at high temperature under argon atmosphere, with a calcination temperature of 250°C, a heating rate of 5°C/min, and a calcination time of 3.5 h; then the single atom zinc material with a zinc content of 10% was obtained.

### Example 4

The preparation method for the single atom zinc material included the following steps:
(1) the nano silica with a particle size of 500 nm was added into a planetary ball mill for ball-milling with a ball-milling speed of 450 rpm. After ball-milling for 30 min, the carrier had a particle size of 100 nm;
(2) 1000 g of the calcium carbonate carrier with a particle size of 100 nm in step (1) was weighted and then added into 1L of 1mol/L aqueous solution of sodium hydroxide under stirring, in which the stirring speed of the stirrer was controlled at 1000 rpm. The mixture was heated to 80°C, fully reacted for 36 h to induce defect sites on the surface of the carrier. Then the resultant was filtered, dried and fully grinded;
(3) the carrier modified in step (2) was mixed with a zinc nitrate solution with a zinc ion content of 200 g/L. The mixture was heated to 60°C, and fully stirred for 16 h. The supernatant was removed. The precipitate was centrifuged, and dried for 12 h in a blast drying oven with a temperature of 110°C. The dried material was ball-milled with a ball-milling speed of 600 rpm for 45 min, after which the ball-milled material had a particle size of 100 nm; and
(4) the solid powder obtained in step (3) was treated at high temperature under argon atmosphere, with a calcination temperature of 350°C, a heating rate of 2°C/min, and a calcination time of 2.5 h; then the single atom zinc material with a zinc content of 20% was obtained.

### Example 5

The preparation method for the single atom zinc material included the following steps:
(1) the nano silica with a particle size of 500 nm was added into a planetary ball mill for ball-milling with a ball-milling speed of 450 rpm. After ball-milling for 30 min, the carrier had a particle size of 100 nm;
(2) 1000 g of the nano silica carrier with a particle size of 100 nm in step (1) was weighted and then added into 1L of 1 mol/L aqueous solution of sodium hydroxide under stirring, in which the stirring speed of the stirrer was controlled at 1000 rpm. The mixture was heated to 80°C, fully reacted for 36 h to induce defect sites on the surface of the carrier. Then the resultant was filtered, dried and fully grinded for 20 min in an agate mortar;
(3) the carrier modified in step (2) was mixed with a zinc nitrate solution with a zinc ion content of 150 g/L. The mixture was heated to 60°C, and fully stirred for 24 h. The supernatant was removed. The precipitate was centrifuged, and dried for 12 h in a blast drying oven with a temperature of 120°C. The dried material was ball-milled with a ball-milling speed of 600 rpm for 45 min, after which the ball-milled material had a particle size of 100 nm; and
(4) the solid powder obtained in step (3) was treated at high temperature under argon atmosphere, with a calcination temperature of 500°C, a heating rate of 5°C/min, and a calcination time of 3h, then the single atom zinc material with a zinc content of 15% was obtained.

### Example 6

The preparation method for the single atom zinc material included the following steps:
(1) the calcium carbonate carrier with a particle size of 500 nm was added into a planetary ball mill for ball-milling with a ball-milling speed of 450 rpm. After ball-milling for 30 min, the carrier had a particle size of 100 nm;
(2) 1000 g of the calcium carbonate carrier with a particle size of 100 nm in step (1) was weighted, and then added into 1L of 1mol/L aqueous solution of sodium hydroxide under stirring, in which the stirring speed of the stirrer was controlled at 1000 rpm. The mixture was heated to 80°C, fully reacted for 36 h to induce defect sites on the surface of the carrier. Then the resultant was filtered, dried and fully grinded for 20 min in an agate mortar;
(3) the carrier modified in step (2) was mixed with a zinc nitrate solution with a zinc ion content of 150 g/L. The mixture was heated to 60°C, and fully stirred for 24 h. The supernatant was removed. The precipitate was centrifuged, and dried for 12 h in a blast drying oven with a temperature of 120°C. The dried material was ball-milled with a ball-milling speed of 600 rpm for 45 min, after which the ball-milled material had a particle size of 100 nm; and
(4) the solid powder obtained in step (3) was treated at high temperature under argon atmosphere, with a calcination temperature of 500°C, a heating rate of 5°C/min, and a calcination time of 3 h; then the single atom zinc material with a zinc content of 15% was obtained.

### Comparative Example

In comparative example 1, a traditional zinc oxide from Lidewang Chemical Co., Ltd was used. The traditional zinc oxide had a purity of 99.7%, in which the zinc content was 80%.

### Comparative example 2

The preparation method for the single atom zinc material included the following steps:
(1) the calcium carbonate carrier with a particle size of 500 nm was added into a planetary ball mill for ball-milling with a ball-milling speed of 450 rpm. After ball-milling for 30 min, the carrier had a particle size of 100 nm;
(2) 1000 g of the calcium carbonate carrier with a particle size of 100 nm in step (1) was weighted and then added into 1L of 1mol/L aqueous solution of sodium hydroxide under stirring, in which the stirring speed of the stirrer was controlled at 1000 rpm. The mixture was heated to 80°C, fully reacted for 36 h to induce defect sites on the surface of the carrier. Then the resultant was filtered, dried and fully grinded for 20 min in an agate mortar;
(3) the carrier modified in step (2) was mixed with a zinc nitrate solution with a zinc ion content of 50 g/L. The mixture was heated to 60°C, and fully stirred for 24 h. The supernatant was removed. The precipitate was centrifuged, and dried for 12 h in a blast drying oven with a temperature of 120°C. The dried material was ball-milled with a ball-milling speed of 600 rpm for 45 min, after which the ball-milled material had a particle size of 100 nm; and
(4) the solid powder obtained in step (3) was treated at high temperature under argon atmosphere, with a calcination temperature of 500°C, a heating rate of 5°C/min, and a calcination time of 3 h; then the single atom zinc material with a zinc content of 5% was obtained.

### Performance test

### Test method/experiment method

1. The chemical properties of the single atom zinc material was tested base on "HG/T 4321-2012 Technical specifications and test method for high interfacial zinc oxide".

**Table 1 Test parameters of examples 1-6 and comparative examples 1-2**

| | Zinc content% | Water content% | Copper content (calculated by Cu)% | Manganese content (calculated by Mn)% | Lead content (calculated by Pb)% | Specific surface area/ m²/g |
|---|---|---|---|---|---|---|
| Example 1 | 10 | 0.08 | 0.0002 | 0.0002 | 0.0001 | 58 |
| Example 2 | 20 | 0.10 | 0.0002 | 0.0003 | 0.0002 | 60 |
| Example 3 | 10 | 0.07 | 0.0002 | 0.0005 | 0.0005 | 57 |
| Example 4 | 20 | 0.11 | 0.0002 | 0.0006 | 0.0006 | 61 |
| Example 5 | 15 | 0.09 | 0.0002 | 0.0003 | 0.0002 | 59 |
| Example 6 | 15 | 0.10 | 0.0002 | 0.0004 | 0.0004 | 60 |
| Comparative example 1 | 80 | 0.25 | 0.0005 | 0.001 | 0.002 | 2.3 |
| Comparative example 2 | 5 | 0.09 | 0.0002 | 0.0002 | 0.0002 | 56 |

The physical properties of zinc oxide was tested base on "GB/T 6038-2006 Rubber test mixes-Preparation, mixing and vulcanization-Equipment and procedures". Comparing the physical properties of the traditional zinc oxide with a purity of 99.7% (calculated by zinc, 80%), the single atom zinc material with a zinc content of 10%, and the single atom zinc material with a zinc content of 20%, the results were as follows:
(1) Vulcanization performance: a vulcameter was used (the temperature was 145 °C), and the test parameters were as follows:

**Table 2 Vulcanization performance test parameters of examples 1-6 and comparative examples 1-2**

| | M_{H}/ (N·m) | M_{L}/ (N·m) | Tₛ₂/min | T₉₀/min |
|---|---|---|---|---|
| Example 1 | 3.984 | 1.055 | 8.67 | 22.25 |
| Example 2 | 4.045 | 1.196 | 10.01 | 23.37 |
| Example 3 | 4.092 | 1.060 | 8.85 | 22.36 |
| Example 4 | 4.096 | 1.183 | 10.08 | 23.85 |
| Example 5 | 4.032 | 1.136 | 9.23 | 23.05 |
| Example 6 | 4.046 | 1.141 | 9.35 | 23.01 |
| Comparative example 1 | 3.850 | 1.012 | 7.43 | 18.42 |
| Comparative example 2 | 3.762 | 1.002 | 7.02 | 16.98 |

(2) Physical and mechanical properties

**Table 3 Physical and mechanical properties test parameters of examples 1-6 and comparative examples 1-2**

| | Tensile strength /MPa | Stress at definite elongation 300% /MPa | Elongation at break /% | Akron abrasion /cm³ |
|---|---|---|---|---|
| Example 1 | 20.5 | 10.1 | 529 | 0.048 |
| Example 2 | 21.4 | 10.7 | 541 | 0.045 |
| Example 3 | 20.8 | 10.4 | 533 | 0.047 |
| Example 4 | 21.7 | 10.8 | 540 | 0.046 |
| Example 5 | 21.2 | 10.4 | 536 | 0.047 |
| Example 6 | 21.3 | 10.5 | 534 | 0.046 |
| Comparative example 1 | 20.1 | 9.9 | 499 | 0.060 |
| Comparative example 2 | 19.2 | 9.5 | 486 | 0.50 |

(3) Aging performance (the aging temperature was 145 °C under hot air, and the aging time was 30 min)

**Table 4 Aging performance test parameters of examples 1-6 and comparative examples 1-2**

| | Tensile strength /MPa | Elongation at break /% |
|---|---|---|
| Example 1 | 17.9 | 408 |
| Example 2 | 18.1 | 444 |
| Example 3 | 18.0 | 411 |
| Example 4 | 18.2 | 446 |
| Example 5 | 18.0 | 422 |
| Example 6 | 18.1 | 425 |
| Comparative example 1 | 16.1 | 375 |
| Comparative example 2 | 15.4 | 356 |

The test parameters of both the single atom zinc material with a zinc content of 10% and the single atom zinc material with a zinc content of 20% in the present application were better than that of the traditional zinc oxide with a purity of 99.7%. Therefore, the single atom zinc materials with different zinc content can play a role in improving performances for different formulations of a rubber factory, and may be as an ideal replacement material of the traditional zinc oxide with a purity of 99.7%.

The present application adopted a new monatomic technology to prepare a newly developed single atom zinc material applied to the rubber field, which can totally replace the traditional zinc oxide. A usage of the metal zinc was decreased by 60%-70%, so the nonferrous metal zinc resources are significantly saved; carbon emissions caused by related smelting are reduced; while residual pollution of heavy metals to the environment are effectively reduced; and industrialization is easy to be achieved.

The single atom zinc material of the present application was applied to medical rubber article. The medical rubber article includes medical rubber gloves and medical rubber stopper.

The single atom zinc material is applied to the medical rubber gloves to replace a traditional superior zinc oxide with a purity of 99.7%.

The medical rubber gloves were prepared by the following raw materials in parts by weight:
0.4 parts of the single atom zinc material in Example 1;
91.0parts of a natural rubber;
2.0 parts of sulfur as a vulcanizing agent;
1.0 part of ethyl phenyl zinc dithiocarbamate as a promoter;
1.0 part of potassium hydroxide as a stabilizer;
2.0 parts of 2,6-di-tert-butyl-p-cresol (BHT) as an anti-aging agent; and
2.0 parts of titanate coupling agent NHX-201 as a dispersant.

A preparation method of the medical rubber gloves was as follows:
step one, preparing a rubber latex for impregnation: the rubber was added into a mixing tank and stirred, then the stabilizer and dispersant were added successively; the rubber latex was pretreated by being heated to a temperature between 30-40°C for not less than 4 h; after that, a rubber latex temperature was adjusted between 40-60°C, then the vulcanizing agent, promoter, anti-aging agent and single atom zinc material were added successively and fully stirred constantly; a sulfurizing time was more than 6 h; a total solid content of the sulfurized latex was controlled at 50±5%, then a conventional sulfurized rubber latex was obtained, and stored by more than 36 h;
step two, a calcium nitrate solution with a weight percentage of 10-15% was prepared as a coagulant; and a crosslinking solution was prepared, in which the crosslinking solution was composed of 2.0-5.0 parts of chloropolyvinyl acetate, 5.0-10.0 parts of polyethylene glycol and 80.0-90.0 parts of deionized water;
step three, the mould was dried fully, then immersed into the coagulant with a temperature of 40-70°C and stayed for 20-35 s; the mould with the coagulant was taken out and dried, then immersed into the conventional sulfurized rubber latex; the temperature was controlled between 25-30°C; after the mould stayed in the conventional sulfurizing rubber latex for 6-15s, it was be taken out and dried; the mould was immersed into the softening water to obtain a latex film;
step four, the latex film was dried and immersed into the crosslinking solution for 10-30 s, then taken out and dried at a low temperature to obtain a crosslinked latex film; and
step five, the crosslinked latex film was crimped to obtain a crimped latex film; then the crimped latex film was dried, sulfurized and demoulded to obtain the medical rubber gloves.

Comparative solution: the single atom zinc material was replaced with 0.8 parts of traditional superior zinc oxide with a purity of 99.7%. In the medical rubber gloves system, the usage amount of the traditional zinc oxide was twice the usage amount of the single atom zinc material. The traditional superior zinc oxide with a purity of 99.7% has a zinc content of 80%.

Physicochemical performance test of the prepared rubber articles was based on GB 10213-2006 "Single-use medical rubber examination gloves".

**Table 5 Tensile force test parameters and tensile elongation test parameters**

| Run | Tensile force/N | | Tensile elongation/% | |
|---|---|---|---|---|
| | Test sample | Comparative sample | Test sample | Comparative sample |
| 1 | 20.5 | 20 | 860 | 860 |
| 2 | 22 | 19.5 | 880 | 880 |
| 3 | 22.5 | 21 | 860 | 880 |
| 4 | 20 | 18.5 | 890 | 890 |
| 5 | 21 | 19 | 880 | 900 |
| 6 | 23 | 20.5 | 860 | 910 |
| 7 | 24.5 | 19.5 | 890 | 880 |
| 8 | 23.5 | 21 | 900 | 900 |
| 9 | 21.5 | 18.5 | 880 | 910 |
| 10 | 25 | 19.5 | 900 | 880 |
| 11 | 22 | 20 | 870 | 890 |
| 12 | 23 | 19.5 | 880 | 900 |

**Table 6 load at certain elongation 300% test parameters**

| Run | Load at certain elongation / N | |
|---|---|---|
| | Test sample | Comparative sample |
| 1 | 1.2 | 1.2 |
| 2 | 1.1 | 1.2 |
| 3 | 1.2 | 1.1 |
| 4 | 1.1 | 1.2 |
| 5 | 1 | 1.3 |
| 6 | 1.2 | 1.3 |
| 7 | 1.3 | 1.2 |
| 8 | 1.3 | 1.3 |
| 9 | 1.2 | 1.2 |
| 10 | 1.2 | 1.1 |
| 11 | 1.3 | 1.1 |
| 12 | 1 | 1.1 |

Comparing the medical rubber gloves prepared by using the single atom zinc material with the medical rubber gloves prepared by using the traditional superior zinc oxide with a purity of 99.7%, it can be seen that the single atom zinc material can improve the tensile force and the tensile elongation of the medical rubber gloves, which can better meet the requirements of the medical workers when using the medical rubber gloves at work.

The single atom zinc material was applied to the medical rubber stopper to replace the traditional superior zinc oxide with a purity of 99.7%.

The medical rubber stopper was prepared by the following raw materials in parts by weight:
95 parts of butyl rubber;
4.0 parts of the single atom zinc material in Example 1;
1 part of urethane as the vulcanizing agent;
1 part of N-tert-butyl-2-benzothiazole sulfenamide as the promoter;
75 parts of calcined kaolin;
10 parts of white carbon black as a functional filler; and
3 parts of silane coupling agent KH560 as the dispersant.

A preparation method of the medical rubber stopper was as follows:
step one, mixing: the butyl rubber, single atom zinc material, vulcanizing agent, promoter, functional filler and dispersant were mixed according to a formulation, then further mixed in an internal mixer and an open mill, respectively, stood for 24-36 h to obtain a rubber mixture;
step two, premolding: the rubber mixture in step one was extruded, calendered, cooled and sliced successively, and stood for 4-12 h to obtain a premolded rubber sheet;
step three, vulcanizing and molding: the premolded rubber sheet was vulcanized with a vulcanizing temperature of 160-180°C, a vulcanizing pressure of 100-150 kg/cm², and a vulcanizing time of 240-360 s; and
step four, die-cutting and cleaning: a vulcanized rubber sheet was die-cut, cleaned and packed to obtain the medical rubber stopper.

Comparative solution: the single atom zinc material was replaced with 2 parts of the traditional superior zinc oxide with a purity of 99.7%. In the medical rubber stoppers system, the usage amount of the traditional zinc oxide was same as the single atom zinc material. The traditional superior zinc oxide with a purity of 99.7% had a zinc content of 80%.

Physicochemical performance test of the prepared rubber article was based on GB 9890-1988 "Medicinal rubber closures for the infusion".

**Table 7 test parameters of the medical rubber stoppers**

| Parameters | Test sample | Comparative sample |
|---|---|---|
| Tensile strength /MPa | 9.8 | 10.8 |
| Tensile permanent deformation rate /% | 23 | 23 |
| Puncture force /N | 78 | 83 |
| Puncture fragmentation /% | 3.5 | 3.4 |
| Shore A hardness | 55 | 58 |
| Zinc ion mobility/ (mg/L) | 0.19 | 98.43 |

The single atom zinc material and the traditional superior zinc oxide with a purity of 99.7% were applied to the medical rubber stoppers; the physical performances of the prepared medical rubber stoppers by using the two are similar; it can be seen that the single atom zinc material can replace the traditional superior zinc oxide with a purity of 99.7% to be applied to the medical rubber stoppers. Further, the zinc ion mobility of the single atom zinc material was significantly lower than the traditional superior zinc oxide with a purity of 99.7% and can meet the requirement for specific mobility of zinc in GB 9685-2016 "Standard for uses of additives in food contact materials and their products".

In summary, the zinc content of the single atom zinc material was far lower than that of the traditional superior zinc oxide with a purity of 99.7% and almost contains no heavy metal, so that it was more in line with the standard of the Chinese medical rubber articles as vulcanization activator of the rubber.

The single atom zinc material was applied to the rubber industry, including industrial rubber articles and tyres.

The single atom zinc material was applied to the industrial rubber article to replace the traditional superior zinc oxide with a purity of 99.7%.

The industrial rubber article was prepared by the following raw materials in parts by weight:
100 parts of ethylene propylene diene monomer;
5 parts of the single atom zinc material in Example 1;
1 part of stearic acid;
95 parts of carbon black;
50 parts of white carbon black;
65 parts of paraffin oil;
1 part of sulfur;
3.5 parts of promoter CZ; and
2 parts of polyethylene glycol;

A preparation method of the industrial rubber article was as follows:
step one, mixing: the ethylene propylene diene monomer, single atom zinc material, stearic acid, carbon black, white carbon black, paraffin oil, promoter CZ and polyethylene glycol were mixed according to a formulation, then then further mixed in an internal mixer and an open mill, respectively, and stood for 24-48 h to obtain a rubber mixture.
step two, premolding: the rubber mixture in step one was extruded, calendered, cooled and sliced successively, and stood for 12-24 h to obtain a premolded rubber;
step three, vulcanizing and molding: the premolded rubber was vulcanized with a vulcanizing temperature of 150-180°C, and a vulcanizing time of 15-40 min; and
step four, compression molding: a vulcanized rubber was compression molded, die-cut, and cleaned to obtain the industrial rubber article.

Comparative solution: the single atom zinc material was replaced with 5 parts of the traditional superior zinc oxide with a purity of 99.7%. In the industrial rubber article system, the usage amount of the traditional zinc oxide was same as the single atom zinc material. The traditional superior zinc oxide with a purity of 99.7% has a zinc content of 80%.

Vulcanization performance and physicochemical performance test of the prepared rubber articles was based on GB/T 6038-2006 "Rubber test mixes-Preparation, mixing and vulcanization-Equipment and procedures", GB/T 528-2009 "Rubber, vulcanized or thermoplastic-Determination of tensile stress-strain properties", and GB/T 531-1999 "Rubber Determination of indentation hardness by means of pocket hardness meters".

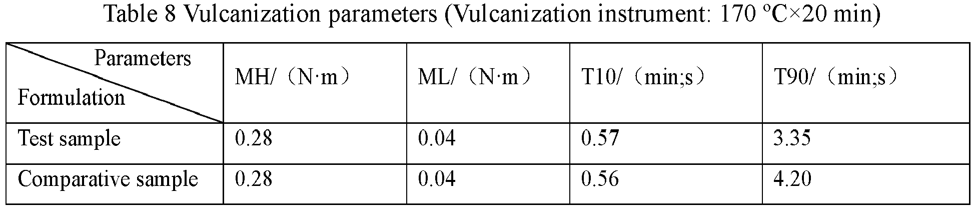

**Table 9 Test parameters of the industry rubber articles**

| Parameters | Test sample | Comparative sample |
|---|---|---|
| Tensile strength /MPa | 12.7 | 12.7 |
| Elongation at break /% | 930 | 878 |
| Shore A hardness | 56 | 55 |

The single atom zinc material and the traditional superior zinc oxide with a purity of 99.7% were applied to the industrial rubber articles, and the physical performances of the prepared industrial rubber articles were almost same. Moreover, because the vulcanizing reaction using the single atom zinc material was faster, which can effectively improve the production efficiency. The elongation at break of the test samples were 5% higher than that of the comparative samples, it can be seen that the single atom zinc material can completely replace the traditional superior zinc oxide with a purity of 99.7% to apply to the industrial rubber articles.

The single atom zinc material is applied to the tyre system to replace the traditional superior zinc oxide with a purity of 99.7%.

The tyre was prepared by the following raw materials in parts by weight:
40 parts of natural rubber;
10 parts of styrene butadiene rubber;
50 parts of polybutadiene rubber BR 9000;
60 parts of carbon black;
1.5 parts of the single atom zinc material in Example 1;
10 parts of environmentally friendly aromatic hydrocarbon;
2 parts of stearic acid;
1.5 parts of anti-aging agent 4020;
1.5 parts of promoter CZ;
3 parts of a bimodal wax;
2.3 parts of soluble phenolic resin;
1.5 parts of anti-scorching agent CTP;
4 parts of white carbon black 330;
1.18 parts of a processing aid; and
2.1 parts of sulfur.

The above described bimodal wax is composed of straight chain alkanes, and low molecular weight and medium molecular weight branched alkanes. The carbon number distribution has two peaks, in which a former peak is at C25, a latter peak is at C32, and is mainly concentrated in C20-C35.

Preparation method for the tyre was as follows:
step one, primary mixing: the natural rubber, styrene butadiene rubber, polybutadiene rubber BR 9000, carbon black 330, single atom zinc material, environmentally friendly aromatic hydrocarbon, stearic acid, anti-aging agent 4020, promoter CZ, protection wax with bimodal specification, soluble phenolic resin, anti-scorching agent CTP, white carbon black and the processing aid were added into an internal mixer according to a formulation for being mixed, then the resultant was naturally cooled to room temperature in the air and stood for 24-48 h to obtain a master batch;
step two, final mixing: the master batch and sulfur were added into the internal mixer for being mixed under heating until the temperature reached 80-150°C to obtain a rubber mixture; and
step three, compression molding: the rubber mixture was putted into the mould, and compression molded to obtain the tyre.

Comparative solution: the single atom zinc material was replaced with 1.5 parts of the traditional superior zinc oxide with a purity of 99.7%. In the tyre system, the usage amount of the traditional zinc oxide was same as the single atom zinc material. The traditional superior zinc oxide with a purity of 99.7% has a zinc content of 80%.

Vulcanization performance and physicochemical performance test of the prepared tyres was based on GB/T 6038-2006 "Rubber test mixes-Preparation, mixing and vulcanization-Equipment and procedures", GB/T 528-2009 "Rubber, vulcanized or thermoplastic-Determination of tensile stress-strain properties", and GB/T 531-1999 "Rubber-Determination of indentation hardness by means of pocket hardness meters".

**Table 10 Vulcanization parameters (145 °C×60 min)**

| Number of times | The first time | | The second time | |
|---|---|---|---|---|
| Samples | Test sample | Comparative sample | Test sample | Comparative sample |
| MH/ (N·m) | 1.6 | 1.5 | 2.16 | 1.99 |
| ML/ (N·m) | 9.67 | 9.34 | 12.91 | 12.44 |
| T10/ (min;s) | 9.09 | 11.44 | 8.19 | 11.05 |
| T30/ (min;s) | 11.02 | 14.17 | 9.56 | 13.13 |
| T60/ (min;s) | 13.25 | 17.15 | 11.54 | 15.39 |
| T90/ (min;s) | 20.06 | 25.27 | 17.04 | 21.56 |
| TS2/ (min;s) | 10.41 | 13.53 | 9.15 | 12.23 |
| T100/ (min;s) | 33.47 | 43.17 | 29.22 | 36.49 |

**Table 11 Physical property parameters (Vulcanizing condition: 145 °C×30 min)**

| Samples | Test sample | Comparative sample |
|---|---|---|
| Shore A hardness | 58 | 58 |
| Stress at definite elongation 50% /MPa | 1.2 | 1.13 |
| Stress at definite elongation 100% /MPa | 1.83 | 1.69 |
| Stress at definite elongation 300% /MPa | 7.29 | 6.79 |
| Tensile strength /MPa | 18.03 | 17.26 |
| Elongation at break /% | 613.18 | 610.26 |
| Permanent deformation rate /% | 20 | 16 |
| Tear strength /(KN/m) | 78.97 | 95.55 |

**Table 12 Physical property parameters (Vulcanizing condition: 145 °C×40 min)**

| Samples | Test sample | Comparative sample |
|---|---|---|
| Shore A hardness | 58 | 58 |
| Stress at definite elongation 50% /MPa | 1.19 | 1.12 |
| Stress at definite elongation 100% /MPa | 1.81 | 1.71 |
| Stress at definite elongation 300% /MPa | 7.24 | 6.95 |
| Tensile strength /MPa | 17.81 | 17.66 |
| Elongation at break /% | 624.33 | 623.4 |
| Permanent deformation rate /% | 16 | 16 |
| Tear strength /(KN/m) | 76.53 | 73.14 |

**Table 13 Physical property parameters (Vulcanizing condition: 145 °C×60 min)**

| Samples | Test sample | Comparative sample |
|---|---|---|
| Shore A hardness | 58 | 58 |
| Stress at definite elongation 50% /MPa | 1.18 | 1.16 |
| Stress at definite elongation 100% /MPa | 1.75 | 1.73 |
| Stress at definite elongation 300% /MPa | 6.96 | 6.87 |
| Tensile strength /MPa | 17.99 | 17.35 |
| Elongation at break /% | 646.24 | 619.32 |
| Permanent deformation rate /% | 16 | 16 |
| Tear strength /(KN/m) | 73.71 | 86.73 |

The single atom zinc material and the traditional superior zinc oxide with a purity of 99.7% were applied to the tyre, and the physical properties of the products have no obvious difference, it can be seen that the single atom zinc material can completely replace the traditional superior zinc oxide with a purity of 99.7% to apply to the tyre.

The above are the preferred embodiments of the present application, which are not intended to limit the protection scope of the present application. Therefore, all equivalent changes made according to the structure, shape and principle of the present application should fall within the protection scope of the present application.

## Claims

1. A single atom zinc material, **characterized by** comprising a carrier and a transition metal, wherein the carrier is one of nano silica and nano calcium carbonate, or a combination thereof; the transition metal is zinc; and the transition metal is anchored on a defect site on a surface of the carrier in a form of a single atom.

2. The single atom zinc material according to claim 1, **characterized in that**, a mass ratio of the transition metal to the carrier in the single atom zinc material is 1:5-1:10.

3. A preparation method of the single atom zinc material according to claim 1 or 2, **characterized by** comprising the following steps:
step one: ball-milling a carrier to obtain a carrier with a particle size of less than or equal to 200 nm;
step two: adding the carrier obtained in step one into an aqueous solution of metal hydroxide, wherein a mass ratio of the 1mol/L aqueous solution of metal hydroxide to the carrier is (1.0-1.2):1; heating to 75-85°C and reacting for 35-40 h to induce defect sites on a surface of the carrier; filtering; drying; and grinding;
step three: mixing the carrier prepared in step two with a zinc metal salt solution with a zinc ion content of 100-200g/L; heating to 58-65°C under stirring for 16-24 h; removing a supernatant; centrifuging; drying for 10-14 h under 100-120°C to obtain a dried material; and ball-milling the dried material to obtain a solid powder; and
step four: activating the solid powder obtained in step three to obtain the single atom zinc material.

4. The preparation method of the single atom zinc material according to claim 3, **characterized in that**, the carrier has a particle size of 500 nm before the ball-milling in step one; and the carrier has a particle size of 100 nm after the ball-milling in step one.

5. The preparation method of the single atom zinc material according to claim 3, **characterized in that**, step two comprises adding 1000 g of the carrier obtained in step one into 1L of 1mol/L aqueous sodium hydroxide solution; heating to 80°C and reacting for 36 h to induce defect sites on the surface of the carrier; filtering; drying; and grinding.

6. The preparation method of the single atom zinc material according to claim 3, **characterized in that**, step three comprises mixing the carrier prepared in step two with 1 L of the zinc metal salt solution with a zinc ion content of 100-200g/L; heating to 60°C under stirring for 16-24 h; removing the supernatant; centrifuging and drying for 12 h under 100-120°C; and ball-milling the dried materials with a ball-milling speed of 600 r/min for 45-60 min to obtain the solid powder with a particle size of 90-120 nm.

7. The preparation method of the single atom zinc material according to claim 3, **characterized in that**, the zinc metal salt solution is zinc nitrate solution.

8. The preparation method of the single atom zinc material according to claim 3, **characterized in that**, in step four, activating the solid powder obtained in step three comprises calcining the solid powder under a temperature of 200-600°C and an argon atmosphere to obtain the single atom zinc material, wherein a calcination heating rate is 2-5°C/min, and a calcination time is 2-6 h.

9. The preparation method of the single atom zinc material according to claim 3, **characterized in that**, the aqueous solution of metal hydroxide is one selected from a group consisting of aqueous sodium hydroxide solution, aqueous calcium hydroxide solution and aqueous potassium hydroxide solution.

10. A rubber article comprising the single atom zinc material according to claim 1 or 2, **characterized in that**, the rubber article is selected from a group consisting of a medical rubber glove, a medical rubber stopper, an industrial rubber article and a tyre.
